# EUROPEAN PATENT APPLICATION

(11) **EP 1 936 548 A1**
(43) Date of publication of application: **25.06.2008**
(21) Application number: 06126227.5
(22) Date of filing: 15.12.2006
(51) Int. Cl.: G06Q 10/00

(54) **Workforce management system**

(71) Applicant: ABB RESEARCH LTD., 8050 Zürich (CH)
(72) Inventor: Mathiesen, Mogens, Oslo N-0308 (NO); Svensson, Stefan, Västerås S-72210 (SE); Pretlove, John ABB, Sandvika N-1338 (NO); Haugen, Trond ABB, Oslo N-0376 (NO)
(74) Representative: Dahlstrand, Björn

(57) **Abstract**

The invention concerns a method, device, and computer program product for contacting users associated with a computer based system as well as to such a computer based system and a workforce management database. In the system there is a database comprising a number of items (User2) representing users of the system. Each item is associated with a set of elements comprising communication settings (CS), communication (C), qualification (Q) and availability (A). There is furthermore a task group providing unit (48) which automatically selects a group of users to participate in solving a task at least based on investigating qualification and availability, determines a strategy in which the group may be contacted through investigating the communication settings, and sets up a communication session to the users in the group via a communication network according to the determined strategy.

## Description

### TECHNICAL FIELD OF THE INVENTION

The present invention relates to the provision of a workforce management system. The invention more particularly relates to a method, device, and computer program product for contacting users associated with a computer based system as well as to such a computer based system and a workforce management database.

### DESCRIPTION OF RELATED ART

Object based computerised systems are known to be used for controlling manufacturing and process industries, such as chemical plants, oil refineries, pulp and paper mills, steel mills, etc.

A typical structure of this type of system is the use of containers and aspects. Such a system is for instance described in WO-01/02953 entitled "Method of integrating an application in a computerized system", which discloses a method for integration of many and various types of applications in a computerized system. This method is based on a concept where real world objects are represented as "composite objects". Different facets of a real world object, such as its physical location, the current stage in a process, a control function, an operator interaction, a simulation model some documentation about the object, etc., are each described as different aspects of the composite object. A composite object is a container for one or more such aspects. Thus, a composite object is not an object in the traditional meaning of object-oriented systems, but rather a container of references to such traditional objects which implement the different aspects. Each aspect or group of aspects may be implemented by an independent software application, which provides its functionality through a set of interfaces that are accessible through the composite object. Another software application can thus query a composite object for a function associated with one of its aspects, and as a result obtain through the composite object, a reference to the interface that implements the function. In this regard a real world object is typically an object involved in a process, like for instance a valve, a tank, a pump etc.

However, the flexible structure and the ease with which applications and functions can be provided in these types of systems is interesting also to use in other fields than in process control. This may furthermore be the case if a company already has such a computer based system. In this case it is of interest to also provide additional functionality in this already existing network.

One such other field is the field of management of the workforce of a company.

The present invention is directed towards using an object based computer system for managing the workforce of an entity like a company and to contacting users associated with such a system in an efficient and simple manner.

### SUMMARY OF THE INVENTION

The present invention is therefore directed towards contacting users associated with a computer based system in an efficient and simple manner.

One object of the present invention is therefore to provide a method for contacting users associated with a computer based system that simplifies selecting and setting up of communication to a task solving group.

This object is according to a first variation of the present invention achieved through a method for contacting users associated with a computer based system where each user is represented by an item in a database, to which item a set of elements are associated comprising the elements of
communication settings, which indicates user terminals that can engage in communication, their information presentation capabilities, available communication mediums, connectivity identifiers and other data relevant for allowing the terminals of the user to engage in communication,
communication, which sets up a connection to the user,
qualification, which indicates the qualification of the user, and
availability, which indicates the availability of the user for engaging in different tasks,
said method comprising the steps of:
selecting a group of users including at least one user to participate in solving a task at least based on investigating the elements of qualification and availability,
determining a strategy in which the group of users may be contacted through investigating at least the element of communication settings, and
setting up a communication session to the users in the group via a communication network according to the determined strategy and using the communication elements of the corresponding user items.

Another object of the present invention is to provide a device for contacting users associated with a computer based system that simplifies selecting and setting up of communication to a task solving group.

This object is according to a second variation of the present invention achieved through a device for contacting users associated with a computer based system where each user is represented by an item in a database, to which item a set of elements are associated comprising the elements of
communication settings, which indicates user terminals that can engage in communication, their information presentation capabilities, available communication mediums, connectivity identifiers and other data relevant for allowing the terminals of the user to engage in communication,
communication, which sets up a connection to the user,
qualification, which indicates the qualification of a user, and
availability, which indicates the availability of the user for engaging in different tasks,
said device comprising:
a task group providing unit being configured to:
   select a group of users including at least one user to participate in solving a task at least based on investigating the elements of qualification and availability, determine a strategy in which the group of users may be contacted through investigating at least the element of communication settings, and
   set up a communication session to the users in the group via a communication network according to the determined strategy and using the communication elements of the corresponding user items.

Another object of the present invention is to provide a computer based system for contacting users of this system that simplifies selecting and setting up of communication to a task solving group.

This object is according to a third variation of the present invention achieved through a computer based system for contacting users of this system and, comprising:
a database comprising a number of items representing users of the system, where each item is associated with a set of elements comprising the elements of
communication settings, which indicates user terminals that can engage in communication, their information presentation capabilities, available communication mediums, connectivity identifiers and other data relevant for allowing the terminals of the user to engage in communication,
communication, which sets up a connection to the user,
qualification, which indicates the qualification of the user, and
availability, which indicates the availability of the user for engaging in different tasks, and
a task group providing unit configured to:
   automatically select a group of users to participate in solving a task at least based on investigating the elements of qualification and availability,
   determine a strategy in which the group of users may be contacted through investigating at least the element of communication settings, and
   set up a communication session to the users in the group via a communication network according to the determined strategy..

Another object of the present invention is to provide a computer program product for contacting users associated with a computer based system that simplifies selecting and setting up of communication to a task solving group.

This object is according to a fourth variation of the present invention achieved through a computer program product for contacting users associated with a computer based system where each user is represented by an item in a database, to which item a set of elements are associated comprising the elements of
communication settings, which indicates user terminals that can engage in communication, their information presentation capabilities, available communication mediums, connectivity identifiers and other data relevant for allowing the terminals of the user to engage in communication,
communication, which sets up a connection to the user,
qualification, which indicates the qualification of a user, and
availability, which indicates the availability of the user for engaging in different tasks, comprising computer program code to make a computer perform when said code is loaded into said computer:
automatically select a group of users to participate in solving a task at least based on investigating the elements of qualification and availability,
determine a strategy in which the group of users may be contacted through investigating at least the element of communication settings, and
set up a communication session to the users in the group via a communication network according to the determined strategy and using the communication elements of the corresponding user items.

Another object of the present invention is to provide a workforce management database, which simplifies the interconnection of users in a computer based system.

This object is according to a fifth variation of the present invention achieved through a workforce management database , comprising a plurality of items, in which database users of a computer based system are each represented by an item, to which item a number of elements in the form of elements are associated comprising the elements of communication settings, which indicates user terminals that can engage in communication, their information presentation capabilities, available communication mediums, connectivity identifiers and other data relevant for allowing the terminals of the user to engage in communication,
communication, which sets up a connection to the user,
qualification, which indicates the qualification of the user, and
availability, which indicates the availability of the user for engaging in different tasks

The present invention has many advantages. The present invention provides a new use of computer based systems that are normally used in process control. It simplifies connections of users. It furthermore simplifies determining what users are available and suitable for a task and how to set up connections to them. In general the present invention provides an enhanced way of interconnecting different users of the system and therefore also facilitates collaboration between the users and therefore allows the provision of a more efficient working environment, where different tasks like the servicing of faulty equipment may be handled in a speedy manner.

It should be emphasized that the term "comprises/comprising" when used in this specification is taken to specify the presence of stated features, integers, steps or components, but does not preclude the presence or addition of one or more other features, integers, steps, components or groups thereof.

### BRIEF DESCRIPTION OF THE DRAWINGS

The present invention will now be described in more detail in relation to the enclosed drawings, in which:
fig. 1 schematically shows a simplified computer based system for providing management of a number of users,
fig. 2 shows a block schematic of a client application in a terminal communicating with a first server providing a database where computer objects are provided in the form of a container with aspects linked to the container together with a table for locating aspects,
fig. 3 outlines a structure of hierarchical objects corresponding to containers as presented for users of the system,
fig. 4 shows a block schematic of a client application communicating with a workforce management container in order to locate aspects of this container,
fig. 5 shows a block schematic of a task group providing aspect, which accesses a qualification aspect of a container associated with a user container via an aspect locating table,
fig. 6 generally shows an application connected to the database, which in turn is connected to a communication network for establishing communication between a number of user terminals,
fig. 7 shows a flow chart outlining a number of method steps taken in a method of connecting to a group of users according to the present invention, and
fig. 8 schematically shows a computer program product in the form of a CD ROM disc comprising computer program code for carrying out the present invention.

### DETAILED DESCRIPTION OF EMBODIMENTS

In the following description, for purposes of explanation and not limitation, specific details are set forth such as particular architectures, interfaces, techniques, etc. in order to provide a thorough understanding of the present invention. However, it will be apparent to those skilled in the art that the present invention may be practiced in other embodiments that depart from these specific details. In other instances, detailed descriptions of well known devices, circuits, and methods are omitted so as not to obscure the description of the present invention with unnecessary detail.

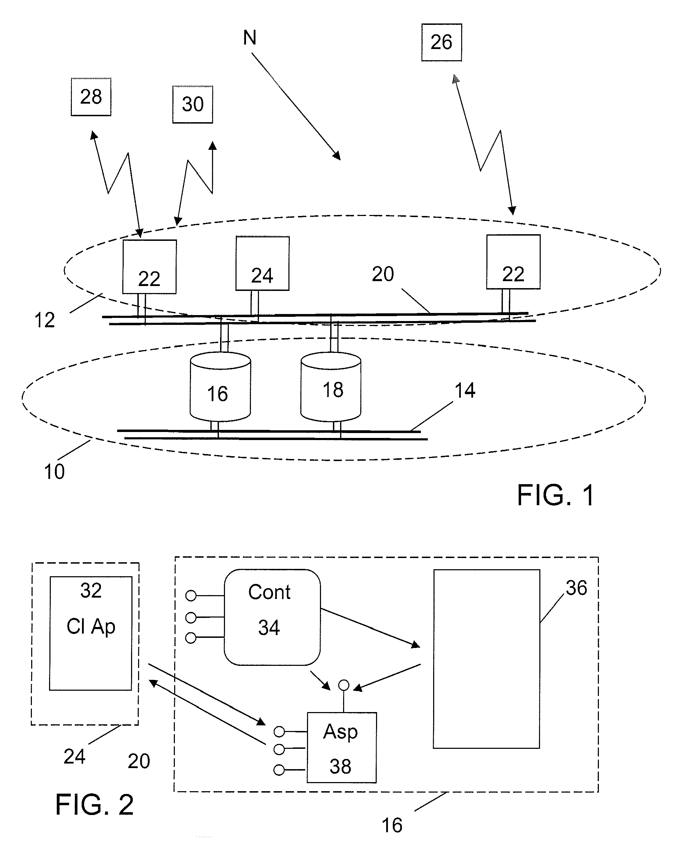

Fig. 1 schematically shows a system or network N for managing the workforce for an entity like a company, a plant, certain premises etc. The system N is typically an object based computerised system and may also include entities for controlling a process or perhaps part of a process. Typical processes are electrical power generation and supply process, water purification and distribution processes, oil and gas production and distribution processes, petrochemical, chemical, pharmaceutical and food processes, and pulp and paper production processes.

The system in fig. 1 is divided into an information providing and control level 10 and a user level 12. If a process were being run it could also include a field device level including one or more controllers having some local software for controlling one or more real world objects in a process. The real world objects could then be different field devices that influence the technical process, like such things as a pump, a motor, a valve, etc., or a more abstract object such as a purchase order, production batch, etc.

In fig. 1 the user level 12 in the system N includes a number of user terminals 24, 26, 28 and 30, where a first user terminal 24 is a stationary user terminal connected to a first bus 20. This first bus 20 also makes up an interface to the information and control level 10. To this bus there are also connected two wireless access points 22 for enabling wireless access to wireless user terminals 26, 28 and 30. The wireless user terminals 26, 28, 39 are portable handheld terminals and are often also denoted HMI (Human Machine Interface). In the information and control level 10 there is a first server 16 comprising computer objects providing a structure of user and management objects and a second server 18 providing different applications that may use the different objects in the first server 16 for performing different workforce management functions. The two servers are here connected to both the first bus 20 as well as to a second bus 14, which bus 14 can be used as an interface to a field device level.

The system shown in fig. 1 is furthermore just an example. It should be realised that there might be more user terminals and perhaps also several different servers. If the system is small it is furthermore possible to have all server functionality in the same physical computer.

The computer objects are normally grouped in a special way. Containers are here used, where there is one container for each user and also for different other entities of the network. Fig. 2 shows a block schematic of the first user terminal 24 comprising a client application 32 in contact with the first server 16 comprising a container Cont 34, an aspect Asp 38 and an aspect lookup table 36. It should be realised that the client application 32 may as an alternative be provided in the first or second server 16 and 18 or in another user terminal 26, 28, 30. If being provided in the second server 18, the client application may be invoked by a user of a terminal. The container 34 is here a so-called COM object having a number of interfaces, where three are shown in fig. 2. COM is an existing published standard and as such is a part of the prior art. More information about COM may for instance be found in the Microsoft MSDN Online Library on the web site maintained by Microsoft. Additional information about COM may also be found in, amongst others, an article in Dr. Dobbs Journal December 1994 entitled The Component Object Model: Technical Overview.

Through these interfaces, the client application 32 can invoke a function that is related to an aspect that is held by the container 34. The client application 32 does this by querying the container 34 for an interface to this function, without knowing the identity of the application that implements the function for which it is seeking an interface. If the container has an aspect that supports the interface then a reference to the interface is returned as some form of pointer to where that interface may be found.

The container Cont 34 thus holds a number of aspects, of which one Asp 38 is shown in fig. 2. Each aspect, which in this embodiment is also provided as a COM object, is related to an object that may be a user or a management object. An aspect represents one facet of the object, and is responsible for all operations on that facet of the object and its data. It can here include data that is related to the object. It may also include or relate to a function associated with the object. The aspect that represents the facet can thus have an association to a function that can perform some action in relation to the object. An object may here represent a user in the system or be an object that provides a number of related functions, for instance a number of workforce management functions.

The container 34 furthermore has access to an aspect lookup table 36, through which it may locate an aspect.

Thus the client application 32 when needing to access a facet of the object connects to the container 34 and requests an interface associated with said facet. The container then locates an aspect 38 associated with the facet via the aspect table 36, interrogates the aspect regarding its interfaces, receives information of an interface and returns the interface, through which the client application 32 may connect to the aspect for retrieving data, perform a function, or control some other aspect provided by another container of the system, etc. How aspects and containers are related is well-known within the art of industrial process control and will therefore not be described in more detail here. It is described in further detail in WO-01/02953, which is herein incorporated by reference. However, such a system has not previously been used for managing a workforce.

What has been described above is thus the normal way containers and aspects function when they are provided in a process control system. It should however be realised that objects need not be grouped into containers and aspects, but that any object structure can be used.

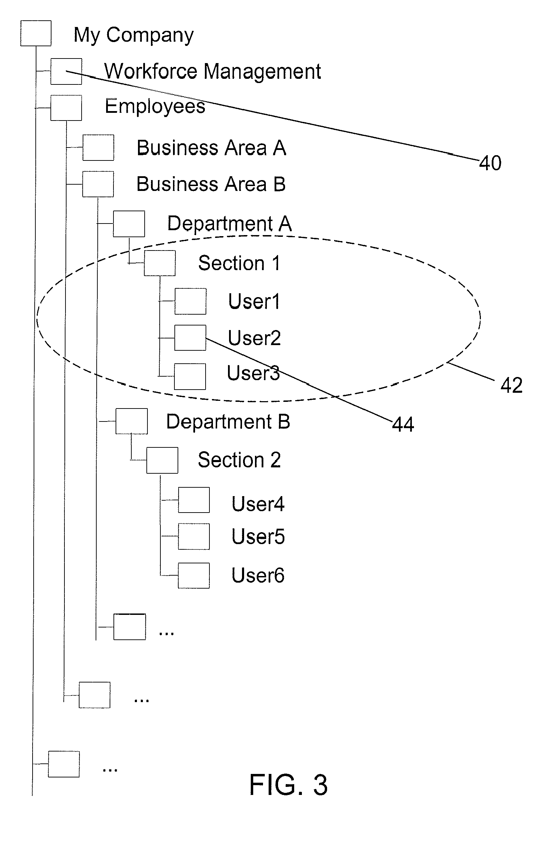

The containers are often organized in hierarchical structures that may be viewed via an application. Fig. 3 shows an example of a number of objects in a workforce management structure according to the present invention. Here a first highest level is named My Company. In a second level there are two objects named Workforce Management 40 and Employees both linked to the object My Company. In a third level there are also two objects named Business Area A and Business Area B linked to the object named Employees. In a fourth level there are provided two objects Department A and Department B, both linked to the object Business Area B. In a fifth level there are provided two objects Section 1 and Section 2, where the object named Section 1 is linked to the object Department A and the object Section 2 is linked to the Department B. In a sixth level, also denoted a user level, there are provided objects named User1, User2 and User3 all linked to the object Section 1, where these objects User1, User2 and User3 are shown as a substructure 42. The object User2 44 here corresponds to a user in the system. In the sixth level there are finally provided objects named User4, User5 and User6 all linked to the object Section2. At least the objects workforce management and the different user objects user1-6 are here containers including a number of aspects.

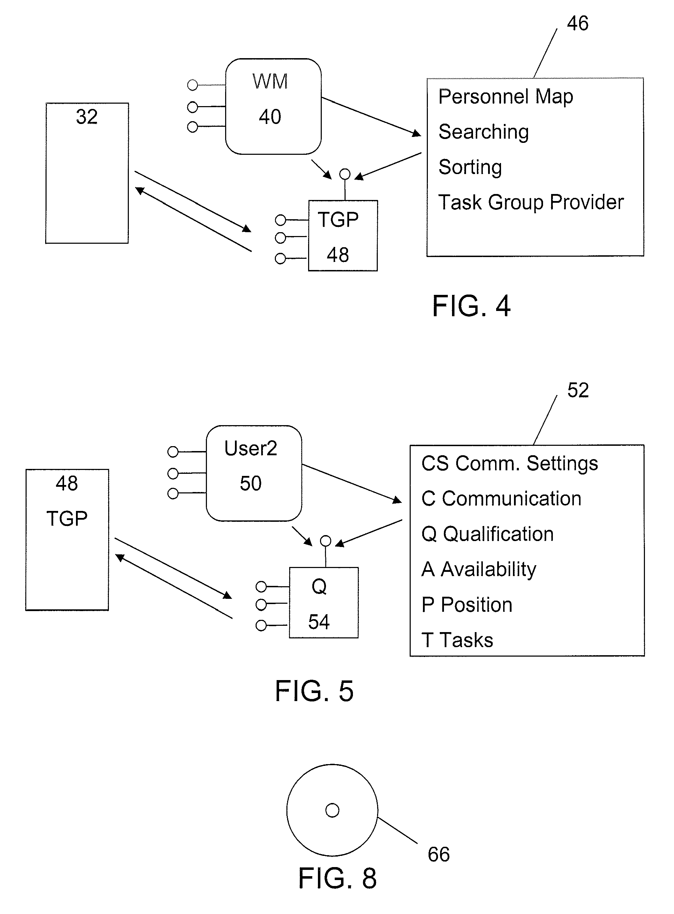

As can be seen in fig. 4, the workforce management container 40 here includes aspects that are related to a number of management functions. The management functions are thus each provided in the form of an aspect, which when called upon by an application 32, which is allowed to call upon this aspect, invokes a function that may be provided in the second server 18. This function can then in turn invoke aspects in the user level in the first server 16. Here the management container comprises an aspect personnel map, which provides information about the location and availability of all user of the system (or sorted on personnel type/location), a searching aspect, which provides a searching function that searches for users that fulfil a certain set of requirements, a sorting aspect, which sorts the users according to qualification. There furthermore exists a specialised version of the searching function, which is provided by a task group provider aspect 48. All these aspects can be located via an aspect lookup table 46 associated with the workforce management container 40. In fig. 4 it is shown how an application 32 locates the task group provider aspect 48. The task group provider aspect will be described in more detail later on. However its main function is that it locates users for a special task and also sets up a communication session for the users selected.

Further aspects that might be included that are here not shown in fig. 4 are an administration aspect, which provides functions based on costs like Salary, ERP, Mailing lists, a benchmarking aspect, which compares the output of workforce/management to benchmarks as well as a workforce analysis aspect.

The objects in the user level are here also provided as containers with aspects. An exemplifying user container User2 50 is here shown in fig 5. As can be seen in fig. 5 the user container comprises a number of aspects that are also denoted elements, where some of the aspects are:

Communication settings CS: This aspect indicates the terminals of the user, which of these that are able to engage in communication, their information presentation capabilities, what communication mediums are available for these terminals, like wireless or fixed networks as well as if there are any limitation in these networks concerning capacity and data types as well as other data that is relevant for allowing the terminals of the user to engage in communication. This other data may include what types of data may be transferred to the user terminals,. information about user display hardware and settings for the display, phone hardware, communicative ability like e-mail, chat, telephone, video, communication mediums like Ethernet, ISDN, PSTN etc.. The data may also include information about which terminal, if there are more than one, that the user is currently using.

Communication C. This aspect sets up a connection to a terminal associated with the user when it is invoked. A connection can be set up via voice/whiteboard/chat/video.

Qualification Q. This aspect gives an overview of the user role, such as qualifications, service history, together with other relevant user data such as a) skills, experience, b) formal training, certificates and c) personality (leader, does not take risks, etc.).

Availability A. This aspect indicates the availability of the user for engaging in different tasks and/or the status of different tasks the user is involved in.

Position P. This aspect indicates the position of the user. It may for instance provide the position on a map of the facility where the system is provided. It is here possible that this aspect continuously or when invoked monitors a position database provided for users in system, to which database a positioning unit associated with the user reports the position. This positioning unit may be provided in a wireless terminal. In this case it is also possible that this aspect, when being invoked, sends a position request directly to the position unit and receives the position directly from it.

Tasks T. This aspect provides information about tasks that the user is involved in and/or responsible for as well of providing information about the types of tasks.

There may furthermore be provided further aspects not shown in fig. 5, like an administrative properties aspect that provides information about user mailing lists, salary information, ERP, personnel system etc.

As can be seen in fig. 5 an application, here in the form of the Task Group Providing aspect 48, locates an aspect, here the quality aspect 54, through investigating the aspect lookup table 52.

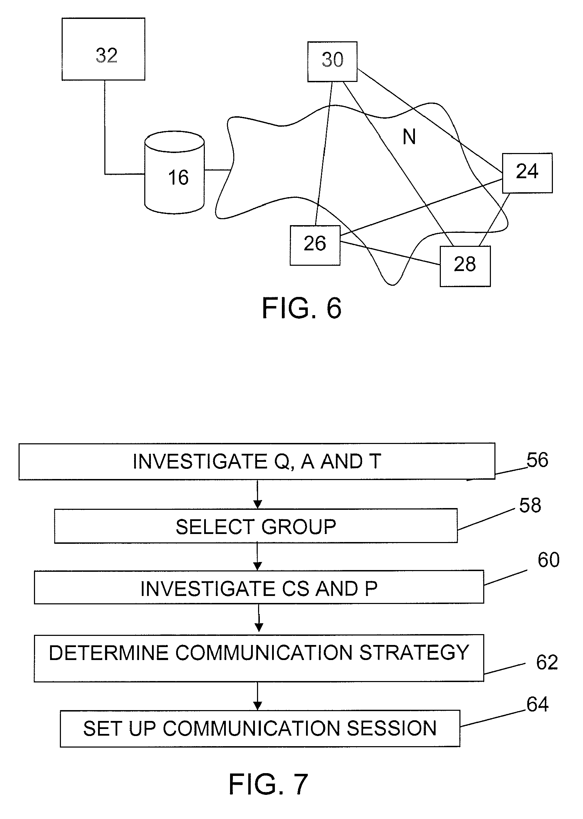

Now one way in which the present invention operates will be described in more detail with reference being made to fig. 1 - 5, as well as to fig. 6, which shows an application connected to the database for invoking aspects therein, which database then establishes communication to a number of user terminals via the system, and to fig. 7, which shows a flow chart outlining a number of method steps taken in a method of connecting to a group of users according to the present invention.

It all starts with a first user of the system wanting to get in contact with at least one other user for solving a task. It is here supposed that the user is allowed access to the different management aspects and then also the task group providing aspect 48 of the workforce management container 40 provided in the first server 16. This first user then first accesses an application 32 via a terminal that he uses, which may thus be a wireless or stationary terminal, and then accesses the workforce management container 40 via the menu shown in fig. 3 using this application 32. There the application 32 accesses the task group providing aspect 48. This starts the function of the task group provider, which in turn starts to operate. The unit in the system where this task group providing aspect is being provided is here also denoted a task group providing unit. In the present embodiment of the present invention this function is furthermore provided in the second server 18, although it should be realised that it may be provided elsewhere, like for instance in the first server 16. As an alternative such a function can be provided directly in the client application and thus be provided for instance in a terminal, like terminal 24. In this latter case the first user would however not need to access the workforce management container 40 in the first server 16.

In relation to this function, the first user here first enters data related to a task to be solved, like how many persons or users that are to be involved, the qualifications needed for different roles for solving the task as well as possibly the time limits involved, like when the solving of the task is to initiated and ended. Possible additional information for this task is position information, like where the task is to solved. This information is then received by the task group providing unit 48. Thereafter the task group providing unit 48 goes on and investigates the aspects of Qualification Q, Availability and possibly tasks T, step 56. It here selects users that are qualified, available i.e. that are not otherwise occupied, and possibly have previous experience of the task or similar tasks. It then provides a number of candidates which the user may select from to be part of the group. It should here be realised that the group may include only one member. The first user then selects one user for each role to be occupied, which selection is then received by the task group providing aspect 48, step 58.

It should be realised that the task group proving aspect may as an alternative automatically select the group without the involvement of the first user. The task group providing aspect 48 then invites the first user to arrange the setting up of a meeting with the thus selected task group. Here the first user may be invited to select a certain time of this meeting, where the offer may include indications of different points in time when all members of the group are available according to their availability settings. The point in time may be directly, i.e. the point in time that the first user accepts the setting up of a meeting or directly after the group has been select, in which case there need not be any invitation sent. Alternatively the point in time is at another point in time associated with for instance the starting of the solving of the task. The aspect 48 may here also inform the task group members that they should reserve the selected time for a meeting. As the point in time is then reached, the task group providing aspect 48 investigates the communication settings aspects CS and the position aspects P for each member of the group, step 60. It there finds out, through investigating these communication settings aspects CS, what type of communication each group member supports, like the capabilities of their fixed and wireless terminals and type of communication supported. By also investigating the position aspect P it furthermore finds out if the member is close to his stationary terminal or perhaps close to a conference room to which a communication session may be placed or somewhere else outside of the premises. This latter case may necessitate the replacement of the member. Based on all this information, the task group providing aspect 48 then determines a communication strategy, step 62. It thus determines how to connect the different group member based on what type of communication that may be set up and what type of data and data content each group member is to be supplied with. I may here investigate the possibility to set up a multimedia session including different types of data and data content for the different group members according to their settings for the terminals and other equipment which may be involved in the session. Based on this strategy the task group providing unit 48 then invokes the communications aspects C of each group member and sets up a connection to them, step 64. As an example fig. 6 shows how the client application 32 connects to the database 16, which in turn sets up communications in the network N between terminals 24, 26, 28 and 30 of the users of the group.

It is here possible that also the participation of the first user is desirable. In this case the group providing aspect 48 may obtain a communication identifier of the first user, which may be an IP address of the terminal he is using or a phone number. In this case the group providing aspect also connects the terminal of the first user to the communication session. As an alternative it is possible that the first user is automatically included in the group and that therefore also the aspects of the container of this first user are being consulted when determining how to connect the group.

In this way the provision of information between the different users of the group is greatly simplified for the first user. The gathering of a suitable group for solving a task is furthermore greatly simplified. In general the present invention provides an enhanced way of interconnecting different users of the system and therefore also facilitates collaboration between the users and therefore allows the provision of a more efficient working environment, where different tasks like the servicing of faulty equipment may be handled in a speedy manner. The present invention furthermore provides a new use of computer based systems that are normally used in process control. In this way it is possible to add functionality to such an existing system and thus enhance the process control system.

In the above described embodiment the communication network in fig. 6 is the same as the system in fig. 1. The communication network may however be different than the system. In this latter case the first server, or rather the communication aspects of the users, may connect to this communication network in order to set up connections. Also these connections may include a connection to the device of the first user, if he is to participate.

It should be realised that the above described scenario is exemplary. The present invention provides other ways in using such a database in order to connect to a selected user.

It is for instance possible for a first user to first use the search function in the workforce management container and there search for suitable persons, for instance one that may be able to provide support for a faulty object. The first user may then invoke, either directly via his own client application, or via said search aspect or another aspect in the workforce management container, the communication aspect of a user he wants to contact. As this is done a communication link is directly set up, by the communication aspect, between the first user and the other user under considering the applicable communication settings.

It is furthermore possible that management functions are not provided in the structure together with the user containers. These functions may as was indicated above, be provided as separate client application that may be provided in or for terminals associated with a user of the system.

The wireless terminals may advantageously be provided in a PDA (Personal Digital Assistant). The wireless communication may here be provided through a number of communication standards. Examples are IEEE 802.15.4 Wireless Hart, WLAN 802.11, Bluetooth, ZigBee or WISA. The stationary terminals may be PCs or workstations. The invention has been described using COM objects. The invention is not limited to COM. Other object technologies that can be used are for instance COBRA and Java.

The device according to the present invention, i.e. the task group providing unit, may each be implemented through one or more processors together with computer program code for performing its functions. The program code mentioned above may also be provided as a computer program product, for instance in the form of one or more data carriers carrying computer program code for performing the functionality of the present invention when being loaded into the computer. One such carrier 66, in the form of a CD ROM disc is generally outlined in fig. 8. It is however feasible with other data carriers, like diskettes, memory sticks or USB memories. The computer program code can furthermore be provided as pure program code on an external server and fetched from there for provision in the device that is to receive it. The different containers and aspects are furthermore also normally provided in the form of computer program code.

While the invention has been described in connection with what is presently considered to be most practical and preferred embodiments, it is to be understood that the invention is not to be limited to the disclosed embodiments, but on the contrary, is intended to cover various modifications and equivalent arrangements. Therefore the present invention is only to be limited by the following claims.

## Claims

1. Method for contacting users associated with a computer based system (N) where each user is represented by an item (User1, User2, User3, User4, User5, User6) in a database (16), to which item a set of elements are associated comprising the elements of
communication settings (CS), which indicates user terminals that can engage in communication, their information presentation capabilities, available communication mediums, connectivity identifiers and other data relevant for allowing the terminals of the user to engage in communication,
communication (C), which sets up a connection to the user,
qualification (Q, 54), which indicates the qualification of the user, and
availability (A), which indicates the availability of the user for engaging in different tasks,
said method comprising the steps of:
selecting (58) a group of users including at least one user to participate in solving a task at least based on investigating (56) the elements of qualification and availability, determining (62) a strategy in which the group of users may be contacted through investigating (60) at least the element of communication settings, and
setting up (64) a communication session to the users in the group via a communication network according to the determined strategy and using the communication elements of the corresponding user items.

2. Method according to claim 1, wherein the communication session is a multimedia session including different types of data and data content, wherein the step of determining a strategy to contact the users comprises determining what type of data and data content each user is to be supplied with based on the data in at least some of the investigated elements.

3. Method according to claim 1 or 2, wherein said set of elements further comprises the element of position (P), which indicates the position of the user and the step of determining a strategy to contact the users involves also investigating the position of the users.

4. Method according to any previous claim, wherein said set of elements further comprises the element of tasks (T), which indicates tasks that the user is involved in and/or responsible for, and the step of selecting a group of users to participate in solving a task is also based on the element of tasks.

5. Method according to any previous claim, where said item representing a user is provided as a container (User2) and each element is provided as an aspect being linked to the container.

6. Method according to any previous claim, where said step of setting up (64) a communication session comprises obtaining a communication identifier of a first user that has initiated the method and setting up said connection between this first user and the group of users.

7. Method according to any of claims 1 - 6, where said step of selecting (58) a group of users comprises automatically selecting a first user that has initiated the method, and the steps of determining a strategy (62) and setting up a communication session (64) are being performed also for this first user.

8. Device (16, 18) for contacting users associated with a computer based system (N) where each user is represented by an item (User1, User2, User3, User4, User5, User6) in a database (16), to which item a set of elements are associated comprising the elements of
communication settings (CS), which indicates user terminals that can engage in communication, their information presentation capabilities, available communication mediums, connectivity identifiers and other data relevant for allowing the terminals of the user to engage in communication,
communication (C), which sets up a connection to the user,
qualification (Q, 54), which indicates the qualification of a user, and
availability (A), which indicates the availability of the user for engaging in different tasks,
said device comprising:
a task group providing unit (48) being configured to:
select a group of users including at least one user to participate in solving a task at least based on investigating the elements of qualification and availability,
determine a strategy in which the group of users may be contacted through investigating at least the element of communication settings, and
set up a communication session to the users in the group via a communication network (N) according to the determined strategy and using the communication elements of the corresponding user items.

9. Device according to claim 8, wherein the communication session is a multimedia session including different types of data and data content, wherein the task group providing unit (48) when determining a strategy to contact the users is configured to determine what type of data and data content each user is to be supplied with based on the data in at least some of the investigated elements.

10. Device according to claim 8 or 9, wherein said set of elements further comprises the element of position (P), which indicates the position of the user and the task group providing unit when determining a strategy to contact the users is configured to also investigate the position of the users.

11. Device according to any of claims 8 - 10, wherein said set of elements further comprises the element of tasks (T), which indicates tasks that the user is involved in and/or responsible for, and the task group providing unit when selecting a group of users to participate in solving a task is also configured to base this selection on the element of tasks.

12. Device according to any of claims 8 - 11, where said item representing a user is provided as a container (User2) and each element is provided as an aspect being linked to the container.

13. Device according to any of claims 8 - 12, where said task group providing unit (48) when setting up a communication session is further configured to obtaining a communication identifier of a first user that has accessed the task group providing unit and set up said connection between this first user and the group of users.

14. Device according to any of claims 8 - 12, where said task group providing unit (48) when selecting a group of users is further configured to automatically select a first user that has that has accessed the task group providing unit and to consider also this first user when determining a strategy and setting up a communication session.

15. Computer based system (N) for contacting users of this system and, comprising:
a database (16) comprising a number of items (User1, User2, User3, User4, User5, User6) representing users of the system, where each item is associated with a set of elements comprising the elements of
communication settings (CS), which indicates user terminals that can engage in communication, their information presentation capabilities, available communication mediums, connectivity identifiers and other data relevant for allowing the terminals of the user to engage in communication,
communication (C), which sets up a connection to the user,
qualification (Q, 54), which indicates the qualification of the user, and
availability (A), which indicates the availability of the user for engaging in different tasks, and
a task group providing unit (48) configured to:
automatically select a group of users to participate in solving a task at least based on investigating the elements of qualification and availability,
determine a strategy in which the group of users may be contacted through investigating at least the element of communication settings, and
set up a communication session to the users in the group via a communication network (N) according to the determined strategy.

16. Computer program product (66) for contacting users associated with a computer based system (N) where each user is represented by an item (User1, User2, User3, User4, User5, User6) in a database (16), to which item a set of elements are associated comprising the elements of
communication settings (CS), which indicates user terminals that can engage in communication, their information presentation capabilities, available communication mediums, connectivity identifiers and other data relevant for allowing the terminals of the user to engage in communication,
communication (C), which sets up a connection to the user,
qualification (Q, 54), which indicates the qualification of a user, and
availability (A), which indicates the availability of the user for engaging in different tasks, comprising computer program code to make a computer (16) perform when said code is loaded into said computer:
automatically select a group of users to participate in solving a task at least based on investigating the elements of qualification and availability,
determine a strategy in which the group of users may be contacted through investigating at least the element of communication settings, and
set up a communication session to the users in the group via a communication network according to the determined strategy and using the communication elements of the corresponding user items.

17. Workforce management database (16), comprising a plurality of items, in which database users of a computer based system (N) are each represented by an item (User1, User2, User3, User4, User5, User6), to which item a number of elements in the form of elements are associated comprising the elements of
communication settings (CS), which indicates user terminals that can engage in communication, their information presentation capabilities, available communication mediums, connectivity identifiers and other data relevant for allowing the terminals of the user to engage in communication,
communication (C), which sets up a connection to the user,
qualification (Q, 54), which indicates the qualification of the user, and
availability (A), which indicates the availability of the user for engaging in different tasks,.

18. Workforce management database according to claim 17, where each such item representing a user further comprises the element of position (P), which indicates the position of the user.

19. Workforce management database according to claim 17 or 18, wherein the items regarding users are provided in a user level (Section 1, Section 2) in a hierarchical structure comprising at least one higher level, where this higher level is a management level comprising a workforce management item (40) for managing said users.

20. Workforce management database according to claim 19, wherein the management item is linked to elements in the form of management functions comprising a function for providing information about the location and availability of users, a searching function for searching for users that fulfil a set of requirements and a function for sorting the users according to qualification.

21. Workforce management database according to any of claims 17 - 20, wherein the items in the database are provided as containers (40, 50) and each element that is associated with this item is provided as an aspect (48, 54) being linked to the container.

22. Workforce management database according to any of claims 17 - 21, wherein the communication element (C) is configured to obtain a communication identifier of an entity that invokes it and set up a connection between this first user and the user associated with the corresponding user item.
